# EUROPÄISCHE PATENTANMELDUNG

(11) **EP 0 889 209 A1**
(43) Veröffentlichungstag der Anmeldung: **07.01.1999**
(21) Anmeldenummer: 97111325.3
(22) Anmeldetag: 04.07.1997
(51) Int. Cl.: F01N 3/28, B01J 35/04

(54) **Abgasleitungssystem und Verfahren zur Reinigung eines Abgases aus einem mit Luftüberschuss betriebenen Verbrennungsmotor**

(71) Anmelder: SIEMENS AKTIENGESELLSCHAFT, 80333 München (DE)
(72) Erfinder: Neufert, Ronald, Dr., 96247 Michelau (DE)

(57) **Zusammenfassung**

Zur Entfernung von Schadstoffen aus einem Abgas eines mit Luftüberschuß arbeitenden Verbrennungsmotors wird ein Abgasleitungssystem und ein Verfahren angegeben, bei dem das Abgas durch ein Abgasrohr (2) in einen Katalysator (7) mit parallelen Strömungskanälen (9) geleitet wird. Durch die Anpassung der Anströmfläche (11) des Katalysators (7) und des hydraulischen Durchmessers der Strömungskanäle (9) an den Durchmesser (3) des Abgasrohrs (2) kann der Abgasgegendruck und damit die Verstopfungsneigung des Abgasleitungssystems verringert und gleichzeitig eine hohe Schadstoffumsatzrate erreicht werden.

## Beschreibung

Die Erfindung betrifft ein Abgasleitungssystem und ein Verfahren zur katalytischen Entfernung von Schadstoffen aus einem Abgas eines mit Luftüberschuß betriebenen Verbrennungsmotors, beispielsweise eines Dieselmotors oder eines Magermix-Benzinmotors. Derartige Schadstoffe sind z.B. Stickoxide, Schwefeloxide, Kohlenmonoxid und Kohlenwasserstoffe, aber auch Dioxine, Furane und andere organische Verbindungen.

Bei dem Betrieb eines Verbrennungsmotors können in nicht unerheblichen Umfang die genannten Schadstoffe entstehen, welche über das Abgas an die Umwelt abgegeben werden und dort Schäden anrichten können. Auch ein Verbrennungsmotor, der mit Luftüberschuß arbeitet, beispielsweise ein Dieselmotor oder ein Magermix-Benzinmotor, gibt solche Schadstoffe bei der Verbrennung eines Treibstoffes an die Umwelt ab.

Um die von einem mit Luftüberschuß arbeitenden Verbrennungsmotor an die Umwelt abgegebenen Schadstoffe zu reduzieren, sind in der Vergangenheit eine Vielzahl von Katalysatoren entwickelt worden. So ist zur Verringerung von Stickoxiden im Abgas eines derartigen Verbennungsmotors beispielsweise die Verwendung eines sogenannten DeNOx - Katalysators bekannt, welcher nach dem Verfahren der selektiven katalytischen Reduktion (SCR) die Stickoxide mit einem geeigneten Reduktionsmittel, meist Ammoniak, zu umweltfreundlichem Stickstoff und Wasser umsetzt.

Auch wurden bezuglich der Geometrie des jeweils verwendeten Katalysators verschiedentlich Überlegungen angestellt, um eine Verstopfung des Katalysators durch die im Abgas eines mit Luftüberschuß arbeitenden Verbennungsmotors enthaltenen unverbrannten Partikel oder Rußteilchen zu vermeiden.

So ist speziell zur Verringerung von im Abgas eines Dieselmotors enthaltenen sogenannten SOF, d.h. von in organischen Lösungsmitteln löslichen, organischen Komponenten, in der EP 0 382 434 B1 ein Reinigungsverfahren beschrieben, bei dem das Abgas des Dieselmotors durch einen Bienenkorbkatalysator, der Zellen parallel zur Strömungsrichtung des Abgases besitzt, geleitet wird. Die einzelnen, durchgehenden Zellen besitzen dabei einen hydraulischen Durchmesser von 1,00 bis 2,00 mm, wobei der Querschnitt der Anströmfläche des Katalysators 10 bis 100 cm² pro Liter Hubraum des Dieselmotors beträgt. Der Prozentsatz des offenen, vom Abgas durchströmbaren Bereiches der Anströmfläche betragt 40 bis 95%.

Nachteiligerweise eignet sich jedoch auch der angegebene Katalysator nur zum Einsatz im Abgas eines Dieselmotors, bei dem bereits motorseitige Primärmaßnamen zur Verringerung des Partikelausstoßes, z.B. in Form von Rußteilchen, getroffen sind.

Der Erfindung liegt die Aufgabe zugrunde, ein vielseitig verwendbares Abgasleitungssystem und ein Verfahren zur Entfernung von im Abgas eines mit Luftüberschuß betriebenen Verbrennungsmotors enthaltenen Schadstoffen anzugeben, womit sich auch im Abgas eines üblichen Dieselmotors ein effektiver katalytischer Abbau der Schadstoffe bei geringer Verstopfungsneigung erreichen läßt.

Die Aufgabe bezüglich des Abgasleitungssystems wird erfindungsgemäß dadurch gelost, daß ein Abgasrohr eines mit Luftüberschuß arbeitenden Verbrennungsmotors an einen von einem Abgas durchströmbaren, wabenförmigen Katalysator mit einer Anzahl paralleler Strömungskanäle angeschlossen ist, wobei das Verhältnis des Durchmessers des Abgasrohrs zur Anströmfläche des Katalysators zwischen 1:1 und 1:3000 m⁻¹, der hydraulische Durchmesser der Strömungskanäle zwischen 1 und 4 mm und der Prozentsatz des offenen, frontalen Bereiches am Einlaß des Katalysators zwischen 45 und 95% beträgt.

Die Aufgabe bezüglich des Verfahrens wird erfindungsgemäß dadurch gelöst, daß das Abgas mit einer Temperatur zwischen 100 und 700 °C durch einen wabenförmigen Katalysator mit einer Anzahl paralleler Strömungskanäle geleitet wird, wobei der offene, frontale Bereich am Einlaß des Katalysators höchstens 95% und mindestens 45% beträgt und die Strömungskanäle einen hydraulischen Durchmesser zwischen 1 und 4 mm besitzen. Dabei wird dem Katalysator das Abgas durch ein Abgasrohr zugeleitet, wobei das Verhältnis des Durchmessers des Abgasrohrs zur Anströmfläche des Katalysators zwischen 1:1 und 1:3000 m⁻¹ beträgt.

Dabei wird prinzipiell unter der Anströmfläche die senkrecht zur Strömungsrichtung des Abgases liegende Gesamtfläche der Anströmseite des Katalysators und unter dem Prozentsatz des offenen, frontalen Bereiches das Verhältnis aus Anströmfläche und Gesamtquerschnittsfläche der Strömungskanäle in Prozent verstanden. Der hydraulische Durchmesser ist definiert als die vierfache Querschnittsfläche eines Strömungskanals, dividiert durch seinen Umfang.

Die Erfindung geht dabei von der Überlegung aus, daß durch einen derartigen Katalysator, welcher spezifisch auf das Abgasrohr angepaßt ist, eine hohe Schadstoffumsatzrate bei gleichzeitig niedrigem Abgasgegendruck erzielt wird, ohne daß hierbei zusätzliche Mittel zur Abgasströmungsvergleichmäßigung erforderlich sind. Aufgrund des niedrigen Abgasgegendrucks neigt ein derartig abgestimmtes System nicht zur Verstopfung durch im Abgas enthaltene Partikel.

Der wabenförmige Katalysator kann dabei als ein Oxidations-Katalysator mit an sich bekannter Zusammensetzung zur Oxidation unverbrannter Kohlenwasserstoffe, Kohlenmonoxid oder von Dioxinen oder Furanen ausgebildet sein. Auch kann der wabenförmige Katalysator als ein Reduktionskatalysator bekannter Zusammensetzung zur Entfernung von Stickoxiden ausgebildet sein.

Um eine Vergleichmäßigung der Abgasströmung im Katalysator, und damit eine optimale Reduzierung von Schadstoffen, zu erreichen, liegt das Verhältnis des Durchmessers des Abgasrohres zur Anströmfläche des Katalysators zwischen 1:1 und 1:3000 m⁻¹. Vorzugsweise liegt das Verhältnis zwischen 1:4 und 1:2500 m⁻¹. Bei einem Verhaltnis kleiner 1:1 m⁻¹ muß der Abgasstrom die bezuglich des Abgasrohres kleinere Querschnittsfläche des Katalysator durchströmen und der Abgasgegendruck am Katalysator steigt. Bei einem Verhältnis von über 1:3000 m⁻¹ wird der wabenförmige Katalysator zu großvolumig, um insbesondere bei nichtstationären Anwendungen im Kraftfahrzeugbereich eingesetzt zu werden.

Liegt der Prozentsatz des offenen, frontalen Bereiches der Einlaßseite des Katalysators unterhalb von 45%, so steigt der Abgasgegendruck, bedingt durch die dann verkleinerte offene Querschnittsfläche der Strömungskanäle an, während die mechanische Stabilität des Katalysators bei einem Prozentsatz oberhalb von 95% aufgrund der dünnen Wandstärke der einzelnen Strömungskanäle stark eingeschränkt ist. Vorteilhaft wird der Prozentsatz des offenen, frontalen Bereiches der Einlaßseite des Katalysators zwischen 60 und 85% gewählt.

Um weiterhin den Druckabfall am Katalysator zu vermindern, weisen die parallelen Strömungskanäle einen hydraulischen Durchmesser zwischen 1 und 4 mm auf. Bei einem hydraulischen Durchmesser von unter 1 mm steigt die Tendenz der Strömungskanäle, sich mit im Abgas enthaltenen Rußteilchen zuzusetzen und so die katalytische Aktivität des Katalysator zu verringern. Bei einem hydraulischen Durchmesser der Strömungskanäle von mehr als 4 mm sinkt die katalytische Umsetzung von Schadstoffen im Katalysator ebenfalls, da die Kontakthäufigkeit der im Abgas mitgeführten Schadstoffe mit der Katalysatoroberfläche abnimmt.

Für einen effektiven Abbau von im Abgas enthaltenen Stickoxiden ist es vorteilhaft, wenn der wabenförmige Katalysator als ein DeNOx-Katalysator ausgeführt ist, an dem u.a. im Abgas enthaltene Stickoxide mit einem zuvor in das Abgas eingebrachten Redinktionsmittel, beispielsweise Ammoniak, nach dem Verfahren der selektiven katalytischen Reduktion (SCR) katalytisch zu Stickstoff und Wasser umgesetzt werden.

Als Reduktionsmittel können dabei selbstverständlich auch Substanzen verwendet werden, welche erst nach dem Einbringen in das Abgas das eigentliche Reduktionsmittel freisetzen. Eine derartige Substanz ist beispielsweise Harnstoff, aus welchem Ammoniak freigesetzt wird.

In Strömungsrichtung des Abgases vor dem DeNOx-Katalysator befindet sich vorteilhafterweise eine Dosiereinrichtung zur Zudosierung des Reduktionsmittels in den Abgasstrom. Dabei kann das Reduktionsmittel eingedüst, eingespritzt oder eingeblasen werden. Hierfür kann beispielsweise eine entsprechend ausgelegte, steuer- oder regelbare Düse vorgesehen sein.

Das Abgasleitungssystem kann an übliche, mit Luftüberschuß betriebene Verbrennungsmotoren, insbesondere an Dieselmotoren oder an Magermix-Benzinmotoren, angeschlossen werden.

Die Erfindung hat den Vorteil, daß aufgrund des geringen Abgasgegendrucks keine Beeinträchtigung der Motorleistung zu erwarten ist. Der Einbau des Abgasleitungssystems führt daher zu einem vernachlässigbaren Kraftstoffmehrverbrauch des Verbrennungsmotors, während der Kraftstoffmehrverbrauch bei Systemen gemäß dem Stand der Technik noch zwischen 5 und 20% liegt.

Nachfolgend wird ein Ausführungsbeispiel der Erfindung anhand einer Figur näher erläutert, welche eine schematische Darstellung eines Dieselmotors mit einem zugeordneten Abgasleitungssystem zeigt.

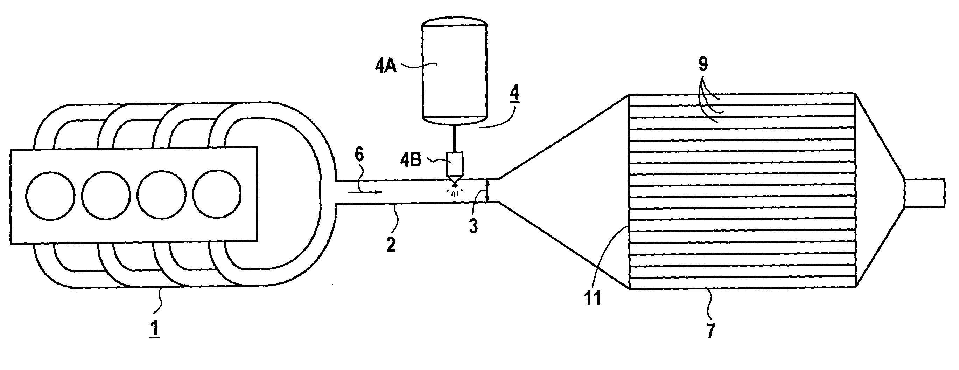

In der Figur ist als ein mit Luftüberschuß arbeitender Verbrennungsmotor 1 ein Dieselmotor gezeigt, welcher über ein Abgasrohr 2 mit einem wabenförmigen Katalysator 7 verbunden ist, der eine Anzahl von Strömungskanälen 9 aufweist, die zur Strömungsrichtung 6 eines Abgases parallel ausgerichtet sind.

Der Katalysator 7 ist dabei als ein DeNOx-Katalysator auf TiO₂-Basis ausgeführt, der als katalytisch aktives Material eine oder mehrere der Substanzen V₂O₅, WoO₃ und MoO₃ umfaßt. Ein derartiger DeNOx-Katalysator reduziert die im Abgas enthaltenen Stickoxide nach dem Verfahren der selektiven katalytischen Reduktion mit Hilfe eines Reduktionsmittels (SCR), beispielsweise Ammoniak, zu Stickstoff und Wasser.

Das im Dieselmotor erzeugte Abgas strömt je nach Betriebszustand des Motors mit einer Temperatur von 100 bis 700 °C durch das Abgasrohr 2 in den Katalysator 7. Bezogen auf die Strömungsrichtung des Abgases ist vor dem Katalysator 7 im Abgasrohr 2 eine Dosiereinrichtung 4 angebracht. Die Dosiereinrichtung 4 umfaßt dabei einen Reduktionsmitteltank 4a und eine daran angeschlossene, steuer- oder regelbare Düse 4b, durch welche das sich im Reduktionsmitteltank befindliche Reduktionsmittel in das durch das Abgasrohr 2 strömende Abgas eingedüst wird. Dies kann beispielsweise mit Hilfe von Druckluft geschehen. Dabei wird das Reduktionsmittel mit dem Abgas innig vermischt.

Als Reduktionsmittel wird Harnstoff verwendet, welcher sich unter den im Abgas herrschenden Bedingungen teilweise zu Ammoniak umwandelt. Zur Unterstützung der Umwandlung kann ein nicht näher gezeigter Hydrolysekatalysator zwischen der Dosiereinrichtung 4 und dem DeNOx-Katalysator 7 angeordnet sein.

Hinter der Dosiereinrichtung 4 weitet sich das Abgasrohr 2 auf eine Anströmfläche 11 des Katalysators 7 auf. Das Verhältnis des Durchmessers 3 des Abgasrohrs 2 zur Anströmfläche 11, d.h. die senkrecht zur Strömungsrichtung 6 des Abgases stehende Fläche des Katalysators 7, beträgt 1:700 m⁻¹. Die Aufweitung des Abgasrohrs 2 auf die Größe der Anströmfläche 11 führt zu einer Vergleichmäßigung der Abgasströmung und damit zu einer gleichmäßigen Verteilung von Abgas und Reduktionsmittel auf den Katalysator 7. Die gleichmäßige Verteilung des Abgases und des Reduktionsmittels auf den Katalysator 7 hat eine optimale Schadstoffumsetzung in den Strömungskanälen 9 des Katalysators 7 zur Folge.

Der Prozentsatz der Anströmfläche 11, der von Abgas und Reduktionsmittel durchströmt werden kann, beträgt 80%.

Die vom Abgas und dem Reduktionsmittel durchströmbaren, parallelen Strömungskanäle 9 haben einen hydraulischen Durchmesser von 2,00 mm.

## Patentansprüche

1. Abgasleitungssystem für einen mit Luftüberschuß arbeitenden Verbrennungsmotor (1) mit einem Abgasrohr (2) und einem daran angeschlossen, von einem Abgas durchströmbaren, wabenförmigen Katalysator (7) mit einer Anzahl von parallelen Strömungskanälen (9),
**dadurch gekennzeichnet**, daß das Verhältnis von Durchmesser (3) des Abgasrohrs (2) zur Anströmfläche des Katalysators (7) zwischen 1:1 und 1:3000 m⁻¹, der hydraulische Durchmesser der Strömungskanäle (9) zwischen 1 und 4 mm und der Prozentsatz des offenen frontalen Bereichs am Einlaß des Katalysators (7) zwischen 45 und 95% beträgt.

2. Abgasleitungssystem nach Anspruch 1,
**dadurch gekennzeichnet**, daß das Verhältnis von Durchmesser (3) des Abgasrohrs (2) zur Anströmfläche (11) des Katalysators (7) zwischen 1:4 und 1:2500 m⁻¹ beträgt.

3. Abgasleitungssystem nach Anspruch 1 oder 2,
**dadurch gekennzeichnet**, daß der hydraulische Durchmesser der Strömungskanäle (9) zwischen 1,2 und 2,5 mm beträgt.

4. Abgasleitungssystem nach einem der Ansprüche 1 bis 3,
**dadurch gekennzeichnet**, daß der Prozentsatz des offenen frontalen Bereichs zwischen 60 und 85% beträgt.

5. Abgasleitungssystem nach einem Ansprüche 1 bis 4,
**dadurch gekennzeichnet**, daß der Katalysator (7) ein DeNOx-Katalysator ist.

6. Abgasleitungssystem nach Anspruch 5,
**dadurch gekennzeichnet**, daß dem DeNOx-Katalysator (7) eine an dem Abgasrohr (2) angeschlossene Dosiereinrichtung (4) zur Zudosierung eines Reduktionsmittels vorgeschaltet ist.

7. Verfahren zur Reinigung eines Abgases aus einem mit Luftüberschuß arbeitenden Verbrennungsmotor (1), umfassend das Durchleiten des Abgases durch einen wabenförmigen Katalysator (7) mit einer Anzahl paralleler Strömungskanäle (9), wobei der Prozentsatz des offenen frontalen Bereichs am Einlaß des Katalysators (7) höchstens 95% beträgt,
**dadurch gekennzeichnet**, daß das Abgas vor dem Katalysator (7) durch ein Abgasrohr (2) geleitet wird, wobei das Verhältnis des Durchmessers (3) des Abgasrohrs (2) zur Anströmfläche (11) des Katalysators (7) zwischen 1:1 und 1:3000 m⁻¹ beträgt, daß das Abgas bei einer Temperatur zwischen 100 und 700 °C durch den Katalysator (7) geleitet wird und daß der hydraulische Durchmesser der Strömungskanäle (9) zwischen 1 und 4 mm und der Prozentsatz des offenen frontalen Bereichs mindestens 45% beträgt.

8. Verfahren nach Anspruch 7,
**dadurch gekennzeichnet**, daß das Verhältnis von Durchmesser (3) des Abgasrohrs (2) zur Anströmfläche (11) des Katalysators (7) zwischen 1:4 und 1:2500 m⁻¹ beträgt.

9. Verfahren nach Anspruch 7 oder 8,
**dadurch gekennzeichnet**, daß der hydraulische Durchmesser der Strömungskanäle (9) zwischen 1,2 und 2,5 mm beträgt.

10. Verfahren nach einem der Ansprüche 7 bis 9,
**dadurch gekennzeichnet**, daß der Prozentsatz des offenen frontalen Bereichs zwischen 60 und 85% beträgt.

11. Verfahren nach einem Ansprüche 7 bis 10,
**dadurch gekennzeichnet**, daß das Abgas durch einen DeNOx-Katalysator (7) geleitet wird.

12. Verfahren nach Anspruch 11,
**dadurch gekennzeichnet**, daß dem Abgas vor Durchleitung durch den DeNOx-Katalysator (7) ein Reduktionsmittels zudosiert wird.
